(19) **Europäisches Patentamt · European Patent Office · Office européen des brevets**

(11) **EP 4 571 684 B1**

(12) # EUROPEAN PATENT SPECIFICATION

(45) Date of publication and mention
of the grant of the patent:
**24.06.2026 Bulletin 2026/26**

(21) Application number: **24218348.1**

(22) Date of filing: **09.12.2024**

(51) International Patent Classification (IPC):
***G06V 40/16*** *(2022.01)*

(52) Cooperative Patent Classification (CPC):
**G06V 40/168; G06V 40/165**

(54) **LANDMARK SELECTION FOR EAR TRACKING**

MARKIERUNGSAUSWAHL ZUR OHRVERFOLGUNG

SÉLECTION DE POINTS DE REPÈRE POUR SUIVI D'OREILLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.12.2023 US 202363608529 P**
**06.12.2024 US 202418971356**

(43) Date of publication of application:
**18.06.2025 Bulletin 2025/25**

(73) Proprietor: **Harman International Industries, Inc.**
**Stamford, Connecticut 06901 (US)**

(72) Inventors:
• **KUCUK, Abdullah**
  **Stamford, 06901 (US)**
• **VILAYSOUK, Vilayphone**
  **Stamford, 06961 (US)**
• **BASTYR, Kevin J.**
  **Stamford, 06901 (US)**

(74) Representative: **Kraus & Lederer PartGmbB**
**Thomas-Wimmer-Ring 15**
**80539 München (DE)**

(56) References cited:
CN-A- 114 866 950     CN-A- 116 508 066
CN-A- 116 582 796     US-A1- 2023 222 687
US-A1- 2023 316 810   US-B1- 11 234 095

## Description

### BACKGROUND

### Field of the Various Embodiments

This application relates to systems and methods for head and ear tracking and, more specifically, to landmark selection for ear tracking.

### Description of the Related Art

Headrest audio systems, seat or chair audio systems, sound bars, vehicle audio systems, and other personal and/or near-field audio systems are gaining popularity. However, the sound experienced by a user of a personal and/or near-field audio system can vary significantly (e.g., 3-6 dB or another value) when a listener moves their head, even very slightly. In the example of headrest audio systems, depending on how the user is positioned in a seat and how the headrest is adjusted, the variation from one person using the audio system to another person can also vary significantly. This amount of sound pressure level (SPL) variability makes tuning audio systems difficult. Furthermore, when rendering spatial audio over headrest speakers, this variability causes features like crosstalk cancellation to fail.

One way of correcting audio for personal and/or near-field audio systems is camera-based head tracking. Camera-based head tracking is increasingly incorporated into vehicles, personal computer gaming, and home theaters as a result of the increasing adoption of driver monitoring systems (DMS), consumer devices that include imaging devices, and web cameras. Using the available cameras, the camera-based head tracking system acquires image data and processes the image to estimate the position of a head in an environment. Based on the estimated head position, the camera-based head tracking system can estimate the position of the ears of the user in space, enabling the audio system to modify characteristics to account for the position of the ears of the user.

However, one drawback of existing camera-based head and/or ear tracking is that the camera image has no physical scale. A camera image includes pixels that are not generally capable of dimensioning or scaling the objects represented therein, because a head or face in the image can be closer or farther away depending on seating position, standing position, and other user positioning. In systems that include scaling, the conventional approach to perform scaling of pixels to distance units involves the use of a presumptive dimension such as an average inter-ocular distance (e.g., the pupillary distance between the center of the pupils of the user). However, the inter-ocular distance varies significantly between individuals; for example the pupillary distance of adults can typically vary between 54 mm to 68 mm. Other presumptive dimensions include average horizontal visible iris diameter (HVID), which can range from 11.6 mm to 12.0 mm for about 50 percent of the population. Some estimates indicate larger variance in the average HVID 12 percent, which is unfortunately similar in accuracy to the inter-ocular distance and so is not a high enough tolerance to yield accurate image scaling. The tolerance produced by using presumptive dimensions is an unacceptable tolerance for personal and/or near-field audio systems, such as headrest speaker systems and the like, to account for head movement of a user. US 2023/316810 A1 discloses a marker-less telepresence tracking system that captures images from one or more cameras, detects facial landmarks, stabilizes feature locations, converts 2D feature locations into 3D positions (e.g., via triangulation), and uses the resulting positions for rendering and audio positioning in a 3D telepresence setup. US 2023/222687 A1 discloses individualized HRTF generation by capturing ear image data, extracting ear landmarks/ markers, normalizing orientation and scale, matching the ear features against a database of stored ear data, and retrieving/adapting a corresponding template HRTF for spatial audio reproduction. Neither D1 nor D2 teaches determining 3D ear positions by selecting head-pose-dependent pairs of facial landmarks and using the inferred ear positions directly for audio signal processing as claimed.

As the foregoing illustrates, what is needed in the art is improved camera-based tracking for audio systems and the like.

### SUMMARY

The invention is defined by the appended claims. Various embodiments disclose a computer-implemented method for audio processing based on a head pose of a user comprises acquiring one or more images of a user, processing the one or more images to identify a plurality of face landmarks representing locations on a head of the user, selecting, from the plurality of face landmarks and based on an estimated head pose of the user, a set of one or more landmark pairs, determine, based on the set of landmark pairs, three-dimensional positions of ears of the user; and processing one or more audio signals to generate one or more processed audio signals based on the three-dimensional positions of the ears.

At least one technical advantage of the disclosed techniques relative to the prior art is that, with the disclosed techniques, accuracy of camera-based head and/or ear tracking is improved. The improved camera-based tracking provides improved noise cancellation, improved crosstalk cancellation, and otherwise an improved three-dimensional audio listening experience for users of personal and/or near-field audio systems such as headrest audio systems, seat/chair audio systems, sound bars, vehicle audio systems, and/or the like. The techniques described also enable the use of images from a single standard imaging camera to track user-specific scaled ear positions in three dimensions. These technical advantages represent one or more technological improvements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 is a schematic diagram illustrating a computing system according to various embodiments;

Figure 2 is a diagram illustrating the operation of the tracking application of Figure 1, according to various embodiments;

Figure 3 is a diagram illustrating exemplary sets of landmark pairs included in the generic head geometry of Figure 1, according to various embodiments;

Figure 4 is a diagram illustrating an exemplary set of landmark coordinates for a series of face landmarks of Figure 1, according to various embodiments;

Figure 5 is a flow diagram of method steps for providing user-specific ear locations to an audio application, according to various embodiments; and

Figure 6 is a flow diagram of method steps for generating user-specific ear locations, according to various embodiments.

## DETAILED DESCRIPTION

**In** the following description, numerous specific details are set forth to provide a more thorough understanding of the various embodiments. However, it will be apparent to one skilled in the art that the inventive concepts may be practiced without one or more of these specific details.

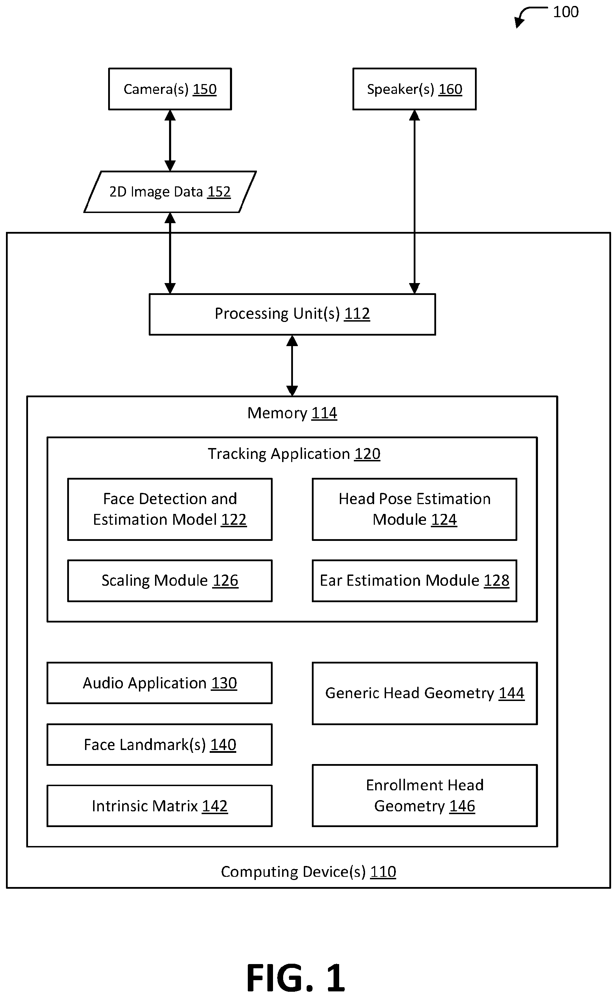

Figure 1 is a schematic diagram illustrating a computing system 100 according to various embodiments. As shown, the computing system 100 includes, without limitation, a computing device 110, one or more cameras 150, and one or more speakers 160. The computing device 110 includes, without limitation, one or more processing units 112 and one or more memories 114. In various embodiments, an interconnect bus (not shown) connects the processing unit 112, the memory 114, the camera 150, the speakers 160, and/or any other components of the computing device 110. The memory 114 stores, without limitation, a tracking application 120, an audio application 130, one or more face landmarks 140, an intrinsic matrix 142, a generic head geometry 144, and an enrollment head geometry 146. The tracking application 120 includes, without limitation, a face detection and landmark estimation model 122, a head pose estimation module 124, a scaling module 126, and an ear estimation module 128. While shown as components of the tracking application 120, the head pose estimation module 124, the scaling module 126, and/or the ear estimation module 128 can include executable instructions that work in concert with the tracking application 120 as subcomponents and/or separate software modules.

In operation, the computing system 100 processes two-dimensional (2D) image data 152 captured using the one or more cameras 150 and performs user-specific image scaling to determine the location of the ears of the user within an environment. The two-dimensional image data 152 includes one or more images of the user captured by the camera 150. The camera 150 continues to capture images of the user over time. In some embodiments, the tracking application 120 uses the face detection and landmark estimation model 122 to successfully detect a face from the two-dimensional image data 152. The face detection and landmark estimation model 122 includes a machine-learning model, a rule-based model, or another type of model that takes two-dimensional image data 152 as input and generates face landmarks 140 and/or face detection statuses. The head pose estimation module 124 uses the face landmarks 140 to estimate the head pose and the depth of the head within the environment relative to the camera 150. The scaling module 126 selects one or more sets of landmark pairs from the face landmarks 140 and uses the selected landmark pairs to scale the head and convert pixel coordinates of the sets of landmark pairs within the 2D image data 152 to three-dimensional coordinates within the environment. The ear estimation module 128 uses the three-dimensional coordinates of the sets of landmark pairs to estimate the three-dimensional coordinates of the ears of the user within the environment. The tracking application 120 can transmit the estimated location of the ears of the user to the audio application 130 for use to generate processed audio signals and/or a sound field.

In various embodiments, the computing device 110 can be included in a vehicle system, a home theater system, a soundbar and/or the like. In some embodiments, the computing device 110 is included in one or more devices, such as consumer products (e.g., portable speakers, gaming, etc. products), vehicles (e.g., the head unit of an automobile, truck, van, etc.), smart home devices (e.g., smart lighting systems, security systems, digital assistants, etc.), communications systems (e.g., conference call systems, video conferencing systems, speaker amplification systems, etc.), and so forth. In various embodiments, the computing device 110 is located in various environments including, without limitation, indoor environments (e.g., living room, conference room, conference hall, home office, etc.), and/or outdoor environments, (e.g., patio, rooftop, garden, etc.). The computing device 110 is also able to provide audio signals (e.g., generated using the audio application 130) to the one or more speakers 160 to generate a sound field that provides various audio effects.

The one or more processing units 112 can be any suitable processor, such as a central processing unit (CPU), a graphics processing unit (GPU), an application-specific integrated circuit (ASIC), a field programmable gate array (FPGA), a digital signal processor (DSP), and/or any other type of processing unit, or a combination of different processing units, such as a CPU configured to operate in conjunction with a GPU and/or a DSP. The processing unit 112 generally comprises one or more programmable processors that execute program instructions to manipulate input data. In some embodiments, the processing unit 112 can include any number of processing cores, memories, and other modules for facilitating program execution. Upon executing the program instructions, the processing unit 112 communicates with the user and/or one or more external devices via an I/O interface and the one or more I/O devices (not shown). Upon executing the application program, the processing unit 112 can also exchange messages with one or more remote devices via a network interface (not shown)

The memory 114 can include a random-access memory (RAM) module, a flash memory unit, or any other type of memory unit or combination thereof. The processing unit 112 is configured to read data from, and write data to, the memory 114. In various embodiments, a memory 114 includes non-volatile memory, such as optical drives, magnetic drives, flash drives, or other storage. In some embodiments, separate data stores, such as an external data stores included in a network ("cloud storage") can supplement the memory 114. The one or more memories 114 store, without limitation, tracking application 120, the audio application 130, as well as the generic head geometry 144 and the enrollment head geometry 146. The tracking application 120 within the memory 114 can be executed by the processing unit 112 to implement the overall functionality of the computing device 110 and, thus, to coordinate the operation of the computing system 100 as a whole.

The memory 114 stores executable programs, including the tracking application 120 and the audio application 130, as well as data, such as the intrinsic matrix 142, the generic head geometry 144, and the enrollment head geometry 146. The intrinsic matrix 142 includes data values associated with the camera 150 that produces the 2D image data 152. The data values can include, for example, the sensor size of the camera, a focal distance of the camera, the principal points (e.g., reference locations), and/or the like. The generic head geometry 144 is a model of a human head that includes three-dimensional locations of the landmarks representing portions of the human face. The enrollment head geometry 146 is a model of a specific human head that includes three-dimensional locations of the landmarks representing portions of a specific face. The locations of the landmarks on the enrollment head geometry 146 is modified from the generic head geometry 146 based on an enrollment process that scales and adjusts the three-dimensional locations of the landmarks.

The tracking application 120 processes the 2D image data 152 received from the one or more cameras 150 and generates data that includes estimates of the ear location and/or the head pose of the user. The estimated ear location and/or the estimated head pose is usable by one or more other applications. For example, the audio application 130 can use the estimated ear location and/or the estimated head pose to modify audio signals that, when outputted by the one or more speakers 160, generate a sound field within an environment. For example, the tracking application 120 can process a given frame of the 2D image data 152 to identify a plurality of face landmarks 140 and determine a number of pixels that are between a landmark pair included in the plurality of face landmarks 140. The tracking application 120 can then generate a depth estimate and uses the depth estimate and the face landmarks 140 to generate estimated ear locations for the user that are scaled, user-specific, and three-dimensional.

The tracking application 120 provides the estimated ear locations, and in some embodiments, the estimated head pose, to the audio application 130. As such, the tracking application 120 performs camera-based head and/or ear position tracking based on the two-dimensional image data 152 captured using the one or more cameras 150. The audio application 130 uses the estimated ear locations (and optionally, the estimated head pose), speaker configuration data, and/or an input audio signal, to generate a set of modified and/or processed audio signals that affect a sound field and/or provide various adaptive audio effects. The adaptive audio effects can include, for example, noise cancellation, crosstalk cancellation, spatial/positional audio effects and/or the like, where the adaptive audio effects adapt to the ear position of the user. For example, the audio application 130 can identify one or more head-related transfer functions (HRTFs) based on the ear locations, the head orientation, and/or the speaker configuration. In some examples, the HRTFs are ear-specific to each ear. The audio application 130 modifies one or more speaker-specific audio signals based on the HRTFs to maintain a desired audio effect that dynamically adapts to the ear positions. In some embodiments, the audio application 130 generates a set of modified or processed audio signals corresponding to a set of speakers 160. In various embodiments, the tracking application 120 provides the scaled user-specific ear locations in real-time (e.g., within 10ms), or near-real-time (e.g. within 100ms).

The one or more cameras 150 include various types of cameras for capturing two-dimensional images of the user. The one or more cameras 150 include a camera of a driver monitoring systems (DMS) in a vehicle, a sound bar, a web camera, and/or the like. In some embodiments, the one or more cameras 150 include only a single standard two-dimensional imager without stereo or depth capabilities. In some embodiments, the computing system 100 includes other types of sensors in addition to the one or more cameras 150 to acquire information about the acoustic environment. Other types of sensors include, without limitation, motion sensors, such as an accelerometer or an inertial measurement unit (IMU) (e.g., a three-axis accelerometer, gyroscopic sensor, and/or magnetometer), pressure sensors, and so forth. In addition, in some embodiments, the sensors can include wireless sensors, including radio frequency (RF) sensors (e.g., sonar and radar), and/or wireless communications protocols, including Bluetooth, Bluetooth low energy (BLE), cellular protocols, and/or near-field communications (NFC).

The one or more speakers 160 include various speakers for outputting audio to create the sound field or the various audio effects in the vicinity of the user. In some embodiments, the speakers 160 include two or more speakers located in a headrest of a seat, such as a vehicle seat or a gaming chair, or another user-specific speaker set connected or positioned for use by a single user, such as a personal and/or near-field audio system. In some embodiments, the speakers 160 are associated with a speaker configuration stored in the memory 114. The speaker configuration indicates locations and/or orientations of the speakers 160 in a three-dimensional space and/or relative to one another and/or relative to a vehicle, a vehicle seat, a gaming chair, a location of the camera 150, and/or the like. The audio application 130 can retrieve or otherwise identify the speaker configuration of the speakers 160.

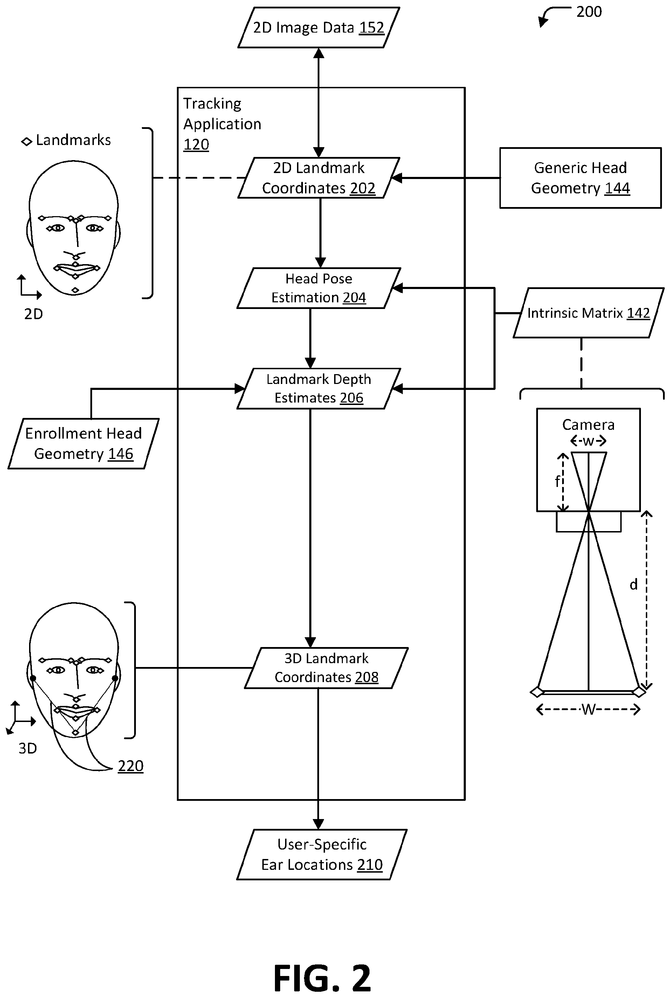

Figure 2 is a diagram illustrating the operation 200 of the tracking application 120 of Figure 1, according to various embodiments. As shown, the operation 200 includes, without limitation, the 2D image data 152, the tracking application 120, the intrinsic matrix 142, the generic head geometry 144, the enrollment head geometry 146, and user-specific ear locations 210. The tracking application 120 includes and/or utilizes, without limitation, one or more two-dimensional landmark coordinates 202, a head pose estimation 204, one or more landmark depth estimates 206, and one or more three-dimensional (3D) landmark coordinates 208.

In operation, the tracking application 120 receives and/or retrieves and processes the 2D image data 152. In various embodiments, the tracking application 120 processes the 2D image data 152 as a series of frames, where the tracking application 120 generates the user-specific ear locations 210 for each frame. Additionally or alternatively, the tracking application 120 can process the 2D image data 152 in real time and continually update the user-specific ear locations 210 for each fame included in the 2D image data 152. In various embodiments, when generating the user-specific ear locations 210, the tracking application 120 can produce intermediate data including, without limitation, the 2D landmark coordinates 202, the head pose estimation 204, the landmark depth estimates 206, and the 3D landmark coordinates 208. The tracking application 120 generates data that includes, without limitation, the user-specific ear locations 210.

In various embodiments, the tracking application 120 uses the face detection and landmark estimation model 122 to the generate the 2D landmark coordinates 202 for a given frame of the 2D image data 152. In such instances, the tracking application 120 can use the face detection and landmark estimation model 122 and/or the generic head geometry to generate the 2D landmark coordinates 202 as pixel coordinates within the frame. The 2D landmark coordinates 202 are two-dimensional locations of one or more pixels for one or more landmarks of portions of a head. Such landmarks can including, without limitation, one or more eye landmarks (e.g., center, outer point, inner point, etc.), one or more eyebrow landmarks (e.g., outer point, inner point, midpoint, etc.), one or more nose landmarks (e.g., bridge, tip, base, root/radix, glabella, etc.), one or more mouth landmarks (e.g., left point, right point, upper midpoint, lower midpoint, etc.), one or more jawline landmarks (e.g., left point, right point, upper midpoint, lower midpoint, etc.), and one or more ear landmarks (e.g., left ear canal, right ear canal, etc.). In some embodiments, the face detection and landmark estimation model 122 does not provide the one or more ear landmarks. The face detection and landmark estimation model 122 stores or otherwise provides the 2D landmark coordinates 202 to the head pose estimation module 124. In some embodiments, the face detection and landmark estimation model 122 and the enrollment head geometry 146 generate landmark pairs (in two-dimensional space and three-dimensional space, respectively) that include, without limitation, the edges of both eyes (e.g., outer edges), a bridge-to-chin landmark pair, a bridge-to-right jawline landmark pair, a left eye inner edge-to-left jawline landmark pair, and a right eyebrow inner edge-to-left jawline landmark pair.

The head pose estimation module 124 generates a head pose estimation 204 based on the 2D landmark coordinates 202. In some embodiments, the head pose estimation module 124 generates the head pose estimation also using the generic head geometry 144. The generic head geometry 144 includes three-dimensional locations of the landmarks that correspond to the two-dimensional locations of the 2D landmark coordinates 202. As a result, the head pose estimation module 124 can analyze the 2D landmark coordinates 202 and the generic head geometry 144 to generate a head pose estimation 204 such as a three-dimensional orientation vector. The orientation vector enables the scaling module 126 to more accurately identify landmark depth estimates 206. In some embodiments, the orientation vector can be expressed as values for 3 axes representing the pitch, yaw, and roll angles relative to a reference position. In such instances, the head pose estimation module 124 can select a plurality of landmarks to determine the head pose estimation 204.

For example, the head pose estimation module 124 can select six landmarks from the generic head geometry 144 and determine the 2D landmark coordinates 202 for the selected landmarks within the 2D image data. The head pose estimation module 124 can then use three-dimensional coordinates for the landmarks in the generic head geometry 144 to estimate the head pose along the three axes. In this manner, the head pose estimation module 124 can select the six landmarks to represent the six degrees-of-freedom (DOF) for head pose. In various embodiments, the head pose estimation module 124 can execute various head pose estimate algorithms, such as the perspective-n-point (PnP) method or model registration.

In various embodiments, the scaling module 126 generates the landmark depth estimates 206 for respective ones and/or pairs of the 2D landmark coordinates 202. In some embodiments, the landmark pairs can include a bridge-to-chin pair, a glabella-to-chin pair, a glabella-to-nasal-base pair, or another pair that is primarily vertical (e.g., having the greatest difference between the coordinates in a vertical dimension). The landmark pairs can include an eye-to-eye pair, a jaw-to-jaw pair, or another pair that is primarily horizontal (e.g., having the greatest difference between the coordinates is in a horizontal dimension). Any set of landmark pairs can be used to generate the head pose estimation 204 and/or the landmark depth estimates 206. Accuracy is increased for landmark pairs that have a greater distance between them. As a result, the bridge-to-chin pair or the glabella-to-chin pair can provide greater accuracy in some embodiments.

In some embodiments, the tracking application 120 generates a scaled enrollment head geometry based on the one or more enrollment images selected from the two-dimensional image data 152. The tracking application 120 can include a machine-learning model, a rule-based model, or another type of model that takes two-dimensional image data 152 as input and generates the enrollment head geometry 146. In some embodiments, inputs to the tracking application to generate the enrollment head geometry 146 can be the intrinsic matrix 142 that includes data such as sensor size of the camera, a focal distance of the camera, and/or the like. Once the enrollment is performed, the tracking application 120 uses the enrollment head geometry 146 and 'live' or most-recently-captured two-dimensional image data 152 to identify user-specific ear locations.

In various embodiments, the tracking application 120 performs a non-real-time enrollment process to generate the enrollment head geometry 146 that is specific to the user. During enrollment, the tracking application 120 selects one or more enrollment images as a subset of images from the 2D image data 152 that are associated with a particular head orientation or range of head orientations. In some embodiments, the tracking application 120 includes a rules-based module or program that detects or identifies a face orientation, such as a face orientation status (e.g., centered and/or facing forward, facing upward, facing downward, facing left, facing right). Enrollment includes a relatively short period of time (e.g., within 30 seconds, within 45 seconds, or within 1 minute) that is not required to be performed in real-time. The enrollment head geometry 146 includes three-dimensional locations (e.g., positions or location in three dimensions) for one or more landmarks. The landmarks include, without limitation, each eye (e.g., center, outer point, inner point, etc.), each eyebrow (e.g., outer point, inner point, midpoint, etc.), the nose (e.g., bridge, tip, base, root/radix, glabella, etc.), mouth (e.g., left point, right point, upper midpoint, lower midpoint, etc.), jawline (e.g., left point, right point, upper midpoint, lower midpoint, etc.), each ear (e.g., ear canal, etc.), and/or the like. The enrollment head geometry 146 generated provides improved accuracy of ear locations relative to using the generic head geometry 144. The improved ear location accuracy provides noticeable improvements to user experience, particularly for personal and/or near-field audio systems, such as headrest audio systems.

The scaling module 126 uses one or more of the 2D landmark coordinates 202, the head pose estimation 204, the enrollment head geometry 146, and/or the intrinsic matrix 142 to generate the landmark depth estimates 206. The landmark depth estimates 206 can be considered a scaling factor that scales the 3D landmark coordinates 208. The scaling module 126 generates the landmark depth estimates 206 based on equation (1).

$$d_{est} = \frac{f*W}{w} \qquad\qquad (1)$$

In equation (1), a focal length of the camera 150 is indicated as $f$. The 3D distance between a pair of landmark coordinates within the environment is indicated as W. The distance between a pair of 2D landmark coordinates 202 in an image (e.g., two-dimensional image data 152) is indicated as w. The landmark depth estimate 206 for a particular 2D landmark coordinates 202 or landmark pair is indicated as $d_{est}$. The focal length of the camera 150 determined during a non-real-time camera calibration process and is included in the intrinsic matrix 142. The distance w in an image frame can be indicated in a number of pixels, and/or can be generated by multiplying the number of pixels by a physical width of each pixel. In some embodiments, the physical width of each pixel can be included in the intrinsic matrix 142. Equation (1) considers an example where a line connecting the pair of 2D landmark coordinates 202 is orthogonal to a direction that the camera 150 is facing. However, the scaling module 126 can use the head pose estimation 204 to improve the accuracy of each landmark depth estimate 206 by accounting for any relationship between the 2D landmark coordinates 202.

In some embodiments, the scaling module 126 can use the enrollment head geometry 146 to generate the landmark depth estimates 206. Additionally or alternatively, in some embodiments, the scaling module 126 selects specific landmark pairs and generates the landmark depth estimates 206. In such instances, the scaling module 126 can select the landmark pairs based on the head pose estimation 206. For example, the scaling module 126 can use the head pose estimation 206 (e.g., an orientation vector that is classified as "looking left") to select one or more landmark pairs that are visible. The scaling module 126 can then generate landmark depth estimates for each landmark included in the selected landmark pairs.

The scaling module 126 generates 3D landmark coordinates 208 using the 2D landmark coordinates 202 and the corresponding landmark depth estimates 206. In some embodiments, the 3D landmark coordinates 208 are generated using equations (2)-(4).

$$X = \left(X_{img} - P_x\right) * d_{est} \qquad (2)$$

$$Y = \left(Y_{img} - P_y\right) * d_{est} \qquad (3)$$

$$Z = d_{est} \qquad (4)$$

In equations (2)-(4), $X$, $Y$, and $Z$ are 3D landmark coordinates 208 corresponding to three-dimensional landmarks in a three-dimensional space. $X_{img}$ and $Y_{img}$ are 2D landmark coordinates 202 generated by the face detection and landmark estimation model 122. $P_x$ and $P_y$ represent the principal points in the X axis and Y axis respectively and act as a reference point within the environment. In various embodiments, the camera calibration process determines the values for $P_x$ and $P_y$ and the determined values are included in the intrinsic matrix 142.

The ear estimation module 128 generates the user-specific ear locations 210 based on the 3D landmark coordinates 208. The ear estimation module 128 transforms the one or more 3D landmark coordinates 208 into user-specific ear locations 210 by applying ear relationships 220 to the 3D landmark coordinates 208 indicated as starting points for the ear relationships 220. The ear relationships 220 include a set of three-dimensional ear relationship vectors, one for each ear. Each ear relationship 220 includes a magnitude and a three-dimensional direction. The ear estimation module 128 calculates an ear location by setting an initial or starting point of an ear relationship 220 at the 3D landmark coordinates 208 for a particular landmark in the enrollment head geometry 146. The ear estimation module 128 identifies the user-specific ear locations 210 as three-dimensional coordinates at a location of the endpoint or terminal point of the ear relationship 220.

In some embodiments, the ear estimation module 128 also uses the head pose estimation 204. For example, the ear estimation module 128 can rotate the ear relationships 220 about a predetermined point in three-dimensional space. If a user is looking to the left (or right), the ear relationships 220 are different than if the user is looking straight. In an instance in which the 2D landmark coordinates 202 and the 3D landmark coordinates 208 include ear landmarks, no landmark-to-ear transform is performed. Rather, the tracking application 120 utilizes the 3D landmark coordinates 208 for the ear landmarks as the user-specific ear locations 210. While a generic ear location can be generated by applying generic ear relationships to the generic head geometry 144, the result would not be scaled to the user. By contrast, the ear relationships 220 and/or the 3D landmark coordinates 208 can be scaled to the user.

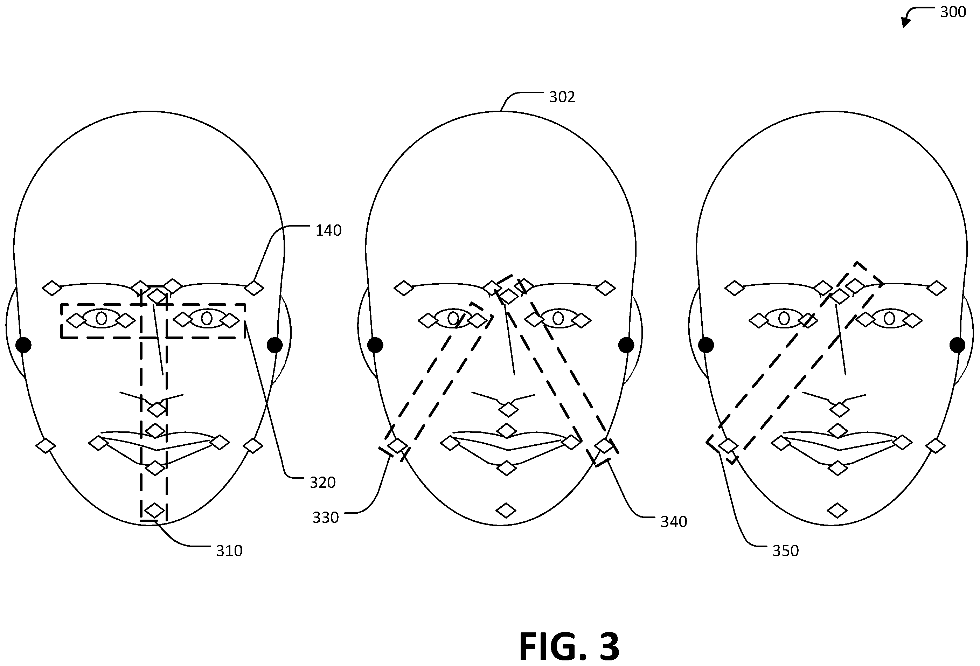

Figure 3 is a diagram 300 illustrating exemplary sets of landmark pairs included in the generic head geometry of Figure 1, according to various embodiments. As shown, the diagram includes an image of a head 302, a plurality of face landmarks 140, and a plurality of landmark pairs 310-350. The plurality of landmark pairs includes a bridge-to-chin pair 310, an eyebrow-to-eyebrow pair 320, a first eye inner edge-to-jaw pair 330, a bridge-to-jaw pair 340, and a second eye inner edge-to-jaw pair 350.

In various embodiments, the tracking application 120 selects one or more landmark pairs for use in generating the head pose estimation 204 and/or the user-specific ear locations 210. For example, the head pose estimation module 124 can select multiple landmark pairs to generate the landmark depth estimates 206. In such instances, the head pose estimation module 124 can select three landmark pairs, including a primarily vertical landmark pair (e.g., the bridge-to-chin pair 310), pair that is primarily horizontal (e.g., the eyebrow-to-eyebrow pair 320), and/or another landmark pair (e.g., the first eye inner edge-to-jaw pair 330) that is viewable in the frame of the 2D image data 152. Similarly, the scaling module 126 can select five landmark pairs, such as each of the landmark pairs 310-350.

In various embodiments, the head pose estimation module 124 and/or the scaling module 126 can select the landmark pairs from the plurality of face landmarks 140 based on criteria to increase the accuracy of the scaling. For example, the criteria can include whether each of the face landmarks 140 in a given landmark pair is in the field of view of the camera 150. When the tracking application 120 does see a given face landmark 140, either the tracking application 120 cannot detect the face landmark 140, or the face landmark is 140 is not viewable by the camera. In such instances, the positional error when using the landmark pair will be higher. Accordingly, the head pose can affect the accuracy of the facial landmark detection and subsequent use. Another criterion is to use the largest separation distance that is possible between the face landmarks 140 in a landmark pair. In various embodiments, any error in landmark detection directly affects the error for subsequent estimations. For example, a longer landmark pair separation distance can produce a lower percentage error when the tracking application 120 labels a face landmark 140 with an error of one pixel. Accordingly, the tracking application 120 can apply preferences to order one or more landmark pairs by separation distances and selecting landmark pairs that have high separation distances or separation distances over a threshold value.

In various embodiments, the tracking application 120 can select the landmark pairs to track and process based on the head pose of the user. In such instances, the tracking application 120 can use the head pose estimation 206 to select one or more landmark pairs that correspond to the head pose. For example, the tracking application 120 can generate a mapping table that identifies a specific landmark pair for each of a plurality of head poses (e.g., classifications of head poses for a given orientation vector). The head poses can be classified based on the general orientation of the head, such as such as "looking left," "looking right," "looking up", "looking down", "looking straight." These head pose classifications can be within a specific range of angles (e.g., within 45° of the principal points). In some embodiments, the tracking application 120 tracks a larger range of motion in the head (e.g., within 20° along the pitch angle of the principal points, within 45° along the yaw angle of the principal points, etc.). In such instances, the tracking application can classify additional head poses that are associated with the additional range of orientation angles.

For example, the tracking application 120 can select a single landmark pair based on the head pose. In such instances, the tracking application can generate a mapping table that specifies one of the landmark pair 310-350 for each head pose. In some embodiments, the tracking application can update the mapping table with the 2D landmark coordinates for the respective face landmarks 140 included in the landmark pair. For example, Table 1 shows the single landmark pairs that correspond to a plurality of head poses.

Table 1: Single landmark pairs for different head poses

| Head Pose | Landmark Pair |
|---|---|
| Looking Left | bridge to-jaw pair 340 |
| Looking Right | eye inner edge-to-jaw pair 330 |
| Looking Up | eye inner edge-to-jaw pair 350 |
| Looking Down | eyebrow-to-eyebrow pair 320 |
| Looking Straight | bridge-to-chin pair 310 |

In some embodiments, the scaling module 126 selects more than one landmark pair for each head pose. In such instances, the multiple landmark pairs reduce improve the estimations generated by the scaling module 126 averaging the landmark distances. As the tracking application 120 can introduce error in the determining the landmark distances by labeling a face landmark 140 as the wrong pixel (resulting in a pixel location that is off by one pixel in X or Y, analogous to jitter). The scaling module 126 can average one or more scaling factors derived from multiple pairs of landmark pairs, reducing or eliminating the jitter and producing a higher accuracy scaling factor. The increase in accuracy of the scaling factor thus leads to higher accuracy in the tracking application 120 tracking head pose and ears of the user. For example, Table 2 shows multiple landmark pairs that correspond to each of the plurality of head poses.

Table 2: Multiple landmark pairs for different head poses

| Head Pose | Landmark Pair(s) |
|---|---|
| Looking Left | brow inner edge-to-jaw pair, brow inner edge to mouth edge pair, bridge to-jaw pair, bridge-to-chin pair |
| Looking Right | bridge-to-chin pair, brow inner edge-to-mouth edge pair, eye inner edge-to-jaw pair, brow inner edge-to-jaw pair, eye inner edge-to-jaw pair |
| Looking Up | cheek bone-to-cheek bone pair, cheek-to-jaw pair, brow outer edge-to-jaw pair, inner eyebrow-to-inner eyebrow pair, eye inner edge-to-jaw pair |

(continued)

| Head Pose | Landmark Pair(s) |
|---|---|
| Looking Down | cheek bone-to-cheek bone pair, brow outer edge-to-jaw pair, brow outer edge-to-jaw pair, eye inner edge-to-chin pair, eye outer edge-to-eye outer edge pair |
| Looking Straight | brow outer edge-to-jaw pair, brow inner edge to mouth edge pair, brow outer edge-to-jaw pair, bridge-to-chin pair |

Additionally or alternatively, in various embodiments, the tracking application 120 applies confidence scores to each face landmark 140. In such instances, the head pose estimation module 124 and/or the scaling module 126 can rank or order the landmark pairs based on the scores for the included face landmarks 140 and select the highest ranking or ordered landmark pairs. In some embodiments, the tracking application can generate the confidence score for a given face landmark 140 based on various criteria such as a detected amount of movement of the face landmark 140 from previous frames, the confidence scores for neighboring face landmarks 140, and so forth.

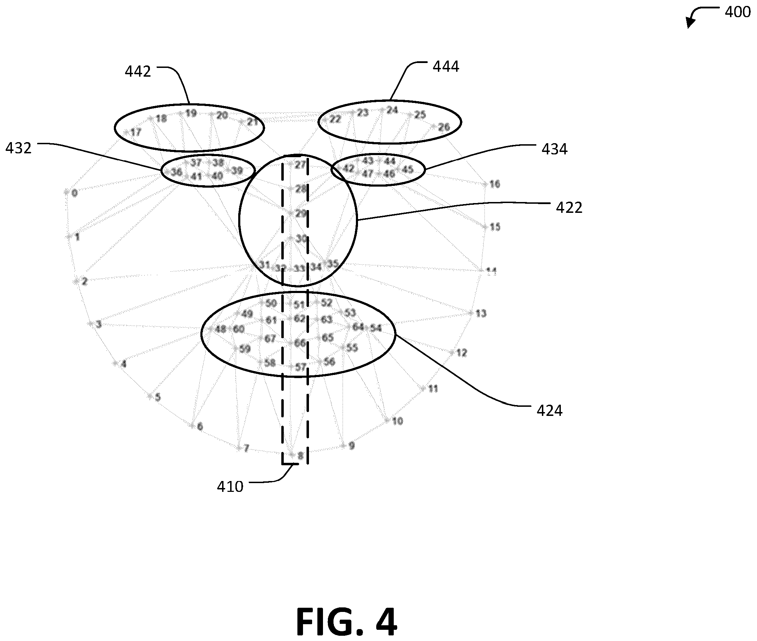

Figure 4 is a diagram illustrating an exemplary set of landmark coordinates 400 for a series of face landmarks of Figure 1, according to various embodiments. As shown, the set of landmark coordinates 400 includes a generic landmark pair 410, a set of landmark regions 422-444, including a nose landmark region 422, a mouth landmark region 424, eye landmark regions 432 and 434, and brow landmark regions 442 and 444.

In various embodiments, the tracking application 120 can select one or more landmark pairs for processing independent of the head pose estimation 206. For example, the tracking application 120 can specify that a generic landmark pair 410 that includes face landmarks 140 for the bridge (coordinate 27) and the chin (coordinate 8) can be used. In such instances, the tracking application 120 can use the generic landmark pair 410 without determining the head pose estimation 206. In some embodiments, the tracking application 120 selects the generic landmark pair 410 based on criteria, such as visibility of the included face landmarks 140 in multiple head poses, accurate labeling of the included face landmarks 140, and/or distance between the face landmarks 140.

In some embodiments, the tracking application 120 selects a single grouping of multiple landmark pairs for all head poses. In such instances, the tracking application 120 averages the selected landmark pairs included in the grouping to estimate the user-specific ear locations 210. The tracking application 120 can select each landmark pair to include in the grouping based on criteria, such as visibility of the included face landmarks 140 in multiple head poses, accurate labeling of the included face landmarks 140, and/or distance between the face landmarks 140. For example, the tracking application 120 can generate a mapping table that includes multiple landmark pairs representing the same landmark regions. For example, Table 3 shows a grouping of landmark pairs that includes distinct landmark pairs between portions of the brow landmark region 442 (e.g., the coordinates 17-21) and the mouth landmark region 424 (e.g., the coordinates 48-67).

Table 3: Landmark pairs for method 5

| Head Pose | Landmark Pair |
|---|---|
| *All poses* | (19,8), (20,7), (21,8), (21,49), (21,57), (21,58), (21,65), (22,8), (22,67), (27,49), (42,8), (42,9), (49,20), (49,21), (53,20), (53,21), (56,22), (56,23), (57,22), (57,23), (59,21), (59,22) |

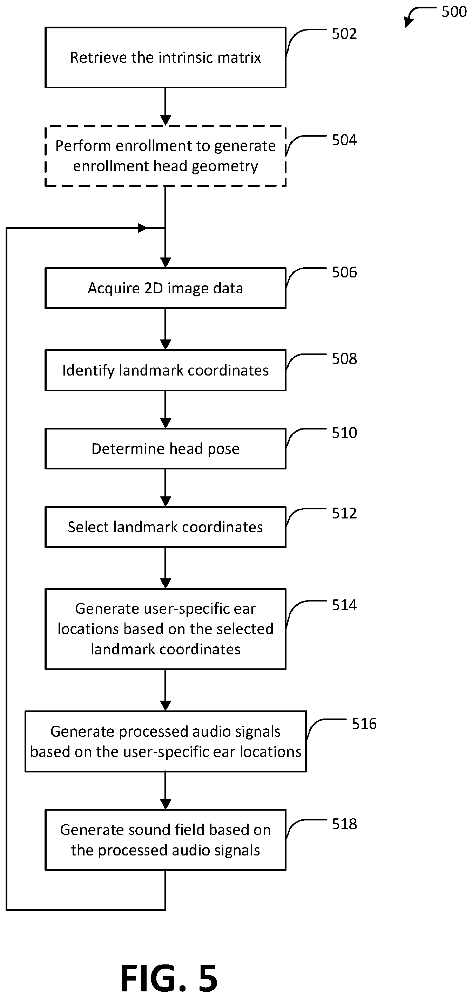

Figure 5 is a flow diagram of method steps for providing user-specific ear locations to an audio application, according to various embodiments. Although the method steps are shown in an order, persons skilled in the art will understand that some method steps may be performed in a different order, repeated, omitted, and/or performed by components other than those described in Figure 5. Although the method steps are described with respect to the systems of Figures 1-4, persons skilled in the art will understand that any system configured to perform the method steps, in any order, falls within the scope of the various embodiments.

As shown, a method 500 begins at step 502, where the tracking application 120 retrieves the intrinsic matrix 142. In various embodiments, the tracking application 120 retrieves the intrinsic matrix 142 from the memory 114. The intrinsic matrix 142 includes one or more data values associated with the camera 150 used to acquire the 2D image data 152. For example, the computing device 110 or another device can perform one or more camera calibration methods that determine the focal length and/or the principal points that are used to generate the landmark depth estimates 206. In such instances, the values for the focal length and/or the principal points can be included in the intrinsic matrix 142 and retrieved by the tracking application 120 when performing real-time estimations of the head pose and/or the ear locations of the user.

At step 504, the tracking application 120 optionally performs enrollment on the head of the user to generate the enrollment head geometry 146. In various embodiments, the tracking application 120 performs a non-real-time enrollment process to generate a scaled enrollment head geometry based on one or more enrollment images selected from the 2D image data 152. During enrollment, the tracking application 120 selects one or more enrollment images as a subset of images from the 2D image data 152 that are associated with a particular head orientation or range of head orientations. The enrollment head geometry 146 includes three-dimensional locations (e.g., positions or location in three dimensions) for one or more face landmarks 140. The enrollment head geometry 146 generated provides improved accuracy of ear locations relative to using the generic head geometry 144. Once the enrollment is performed, the tracking application 120 uses the enrollment head geometry 146 and 'live', or most-recently-captured, two-dimensional image data 152 to identify user-specific ear locations.

At step 506, the tracking application 120 acquires the 2D image data 152. In various embodiments, the tracking application 120 retrieves the 2D image data 152 from the memory 114 and/or receives the 2D image data 152 from the camera 150. The two-dimensional image data 152 can include one or more images captured using the camera 150. The tracking application 120 receives and/or retrieves updated two-dimensional image data 152 over time to provide user-specific ear locations 210 that are dynamically updated in real-time.

At step 508, the tracking application 120 identifies the 2D landmark coordinates 202. In various embodiments, the tracking application 120 uses the face detection and landmark estimation model 122 to generate the 2D landmark coordinates 202 based on the 2D image data 152. The 2D landmark coordinates 202 are two-dimensional locations for one or more face landmarks 140 on the head of the user. For example, the face landmarks 140 can include one or more landmarks at locations of the eye, eyebrow, nose, mouth, jawline, ear, cheek, and/or the like.

At step 510, the tracking application 120 determines the head pose. In various embodiments, the head pose estimation module 124 of the tracking application 120 can process one or more of the 2D landmark coordinates 202 to generate the head pose estimation 204. In some embodiments, the head pose estimation module 124 generates the head pose estimation also using the generic head geometry 144. The generic head geometry 144 includes three-dimensional locations of the landmarks that correspond to the two-dimensional locations of the 2D landmark coordinates 202. As a result, the head pose estimation module 124 can analyze the 2D landmark coordinates 202 and the generic head geometry 144 to generate a head pose estimation 204 such as a three-dimensional orientation vector. The orientation vector enables the scaling module 126 to more accurately identify landmark depth estimates 206. In some embodiments, the orientation vector can be expressed as values for 3 axes representing the pitch, yaw, and roll angles relative to a reference position. In such instances, the head pose estimation module 124 can select a plurality of landmarks to determine the head pose estimation 204.

At step 512, the tracking application 120 selects two or more 2D landmark coordinates 202. In various embodiments, the scaling module 126 of the tracking application 120 selects one or more landmark pairs to use to estimate the head pose and/or the ear locations of the user. In such instances, the scaling module 126 can retrieve the 2D coordinates that correspond to each of the face landmarks 140 included in each of the selected landmark pairs. In some embodiments, the scaling module 126 determines landmark depth estimates 206 for each of the face landmarks 140 included in the selected landmark pairs. In such instances, the scaling module 126 generates the landmark depth estimates 206 for the respective 2D landmark coordinates 202 based on the enrollment head geometry 146. The landmark depth estimates 206 can be considered a scaling factor that scales the 3D landmark coordinates 208.

At step 514, the tracking application 120 generates the user-specific ear locations 210 based on the 3D landmark coordinates 208. In various embodiments, the scaling module 126 converts the 2D landmark coordinates 202 into the 3D landmark coordinates 208 that are scaled and user-specific to the user. The generated scaled, 3D landmark coordinates 208 are based on the 2D landmark coordinates 202 and the corresponding landmark depth estimates 206. In such instances, the scaling module 126 can use information from the intrinsic matrix 142, such as the focal length value, to accurately generate the 3D landmark coordinates 208. The ear estimation module 128 of the tracking application then generates the user-specific ear locations 210 based on the 3D landmark coordinates 208. The ear estimation module 128 transforms the one or more 3D landmark coordinates 208 into ear locations by applying the ear relationships 220 to the 3D landmark coordinates 208 indicated in the ear relationships 220. However, in an instance in which the 2D landmark coordinates 202 and the 3D landmark coordinates 208 include ear landmarks, the tracking application 120 identifies the 3D landmark coordinates 208 corresponding to the ear landmarks, and uses these 3D landmark coordinates 208 as the user-specific ear locations 210..

At step 516, the audio application 130 generates the processed audio signals based on the user-specific ear locations 210. In some embodiments, the audio application 130 generates the processed audio signals further based on the head pose estimation 204. For example, the audio application 130 identifies one or more HRTFs based on the user-specific ear locations 210, the head pose estimation 204, and a speaker configuration. The audio application 130 generates the processed audio signals based on the HRTFs to maintain a desired audio effect that dynamically adapts to the user-specific ear locations 210. The processed audio signals are generated to produce a sound field and/or provide various adaptive audio effects, such as noise cancellation, crosstalk cancellation, spatial/positional audio effects and/or the like, where the adaptive audio effects adapt to the user-specific ear locations 210 of the user. In some embodiments, the computing system 100 includes one or more microphones, and the audio application 130 uses the microphone audio signal and/or other audio signals to generate the processed audio signals. In some embodiments, the audio application 130 generates the processed audio signals further based on a speaker configuration for a set of speakers 160.

At step 518, the audio application 130 provides the processed audio signals to the speakers 160. The speakers 160 generate a sound field based on the processed audio signals. As a result, the sound field includes one or more audio effects that are dynamically adapted to the user in real-time based on the user-specific ear locations 210 and the head pose estimation 204. The process proceeds back to step 506 so that the sound field is dynamically adapted based on updated user-specific ear locations 210 identified using updated two-dimensional image data 152.

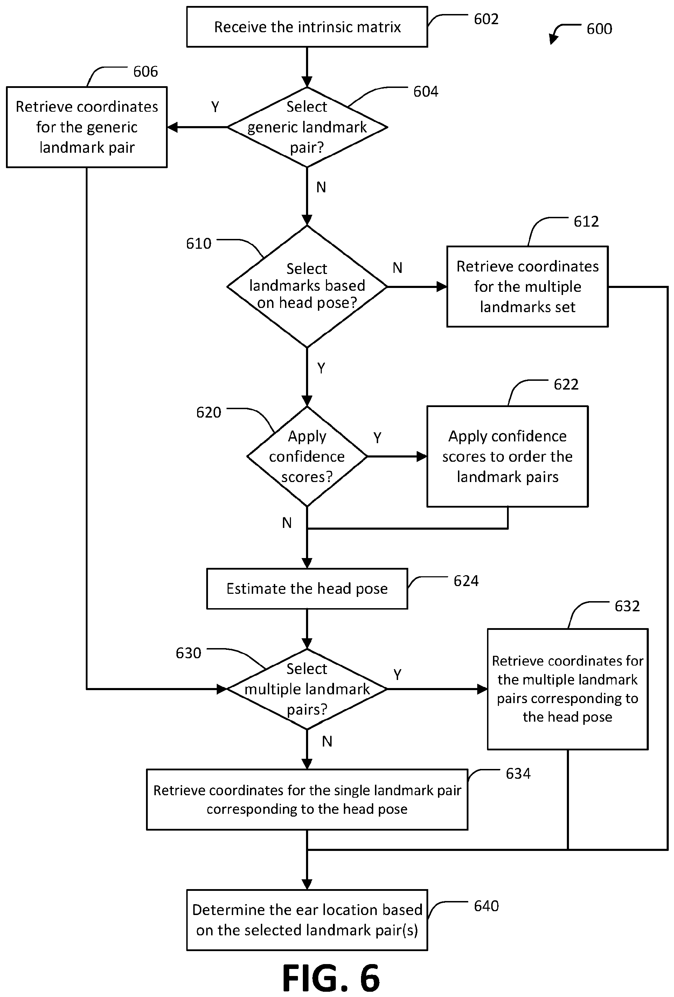

Figure 6 is a flow diagram of method steps for generating user-specific ear locations, according to various embodiments. Although the method steps are shown in an order, persons skilled in the art will understand that some method steps may be performed in a different order, repeated, omitted, and/or performed by components other than those described in Figure 6. Although the method steps are described with respect to the systems of Figures 1-4, persons skilled in the art will understand that any system configured to perform the method steps, in any order, falls within the scope of the various embodiments.

As shown, the method 600 begins at step 602, where the tracking application 120 retrieves the intrinsic matrix 142. In various embodiments, the tracking application 120 retrieves the intrinsic matrix 142 from the memory 114. The intrinsic matrix 142 includes one or more data values associated with the camera 150 used to acquire the 2D image data 152. For example, the computing device 110 or another device can perform one or more camera calibration methods that determine the focal length and/or the principal points that are used to generate the landmark depth estimates 206. In such instances, the values for the focal length and/or the principal points can be included in the intrinsic matrix 142 and retrieved by the tracking application 120 when performing real-time estimations of the head pose and/or the ear locations of the user.

At step 604, the tracking application 120 determines whether to select a generic landmark pair. In various embodiments, the tracking application 120 can select one or more landmark pairs for processing, where the selection is independent of the head pose estimation 206. For example, the tracking application 120 can specify that a generic landmark pair 410 be used to estimate the ear locations of the user. When the tracking application 120 determines to use the generic landmark pair be used, the tracking application proceeds to step 606. Otherwise, the tracking application 120 proceeds to step 610.

At step 606, the tracking application 120 retrieves coordinates for the generic landmark pair 410. In various embodiments, the scaling module 126 of the tracking application 120 can use the generic landmark pair 410 without determining the head pose estimation 206. In some embodiments, the tracking application 120 selects the generic landmark pair 410 based on criteria, such as visibility of the included face landmarks 140 in multiple head poses, accurate labeling of the included face landmarks 140, and/or distance between the face landmarks 140. In such instances, the scaling module 126 retrieves the 2D landmark coordinates 202 for each of the face landmarks 140 included in the generic landmark pair 410.

At step 606, the tracking application 120 determines whether to select landmarks based on the head pose. In various embodiments, the tracking application 120 selects a single grouping of multiple landmark pairs for all head poses. In such instances, the tracking application 120 averages the selected landmark pairs included in the grouping to estimate the user-specific ear locations 210 without needing to determine the head pose of the user. When the tracking application 120 determines not to select the face landmarks 140 based on the head pose, the tracking application 120 proceeds to step 612. Otherwise, the tracking application 120 determines to select face landmarks 140 based on the head pose and proceeds to step 620.

At step 612, the tracking application 120 retrieves coordinates for the multiple landmarks included in the single grouping of multiple landmark pairs. In various embodiments, the scaling module 126 of the tracking application 120 can select each landmark pair to include in the single grouping based on criteria, such as visibility of the included face landmarks 140 in multiple head poses, accurate labeling of the included face landmarks 140, and/or distance between the face landmarks 140. Upon selecting the multiple landmark pairs, the scaling module 126 retrieves the 2D landmark coordinates 202 that corresponds to the each of the respective face landmarks 140 included in the grouping.

At step 620, the tracking application 120 determines whether to apply confidence scores to the landmark pairs. In various embodiments, the tracking application 120 can determine confidence scores for each face landmark 140. In such instances, the head pose estimation module 124 and/or the scaling module 126 can rank or order landmark pairs based on the confidence scores for the included face landmarks 140. When the tracking application 120 determines to apply the confidence score, the tracking application 120 proceeds to step 622. Otherwise, the tracking application 120 determines not to apply the confidence scores and proceeds to step 624.

At step 622, the tracking application 120 applies the confidence scores to the respective face landmarks 140. In such instances, the head pose estimation module 124 and/or the scaling module 126 can select the highest ranking or ordered landmark pairs. In some embodiments, the tracking application can generate the confidence score for a given face landmark 140 based on various criteria such as a detected amount of movement of the face landmark 140 from previous frames, the confidence scores for neighboring face landmarks 140, and so forth.

At step 624, the tracking application 120 estimates the head pose of the user. In various embodiments, the head pose estimation module 124 of the tracking application 120 can generate the head pose estimate based on the 2D landmark coordinates 202 and/or values included in the intrinsic matrix 142. In some embodiments, the head pose estimation module 124 generates the head pose estimation 204 also using the generic head geometry 144. The generic head geometry 144 includes three-dimensional locations of the landmarks that correspond to the two-dimensional locations of the 2D landmark coordinates 202. As a result, the head pose estimation module 124 can analyze the 2D landmark coordinates 202 and the generic head geometry 144 to generate a head pose estimation 204 such as a three-dimensional orientation vector. The orientation vector enables the scaling module 126 to more accurately identify landmark depth estimates 206. In some embodiments, the orientation vector can be expressed as values for 3 axes representing the pitch, yaw, and roll angles relative to a reference position. In such instances, the head pose estimation module 124 can select a plurality of landmarks to determine the head pose estimation 204.

At step 630, the tracking application 120 determines whether to select multiple landmark pairs based on the head pose. In various embodiments, the tracking application 120 selects one or more landmark pairs for use in generating the head pose estimation 204 and/or the user-specific ear locations 210. For example, the tracking application 120 can determine whether to select the landmark pairs to track and process based on the head pose of the user. In such instances, the tracking application 120 can use the head pose estimation 206 to select one or more landmark pairs that correspond to the head pose. In some embodiments, the scaling module 126 selects more than one landmark pair for each head pose. In such instances, the multiple landmark pairs reduce the estimations generated by the scaling module 126 averaging the landmark distances. When the tracking application 120 determines to select multiple landmark pairs, the tracking application 120 proceeds to step 632. Otherwise, the tracking application 120 determines to select a single landmark pair based on the head pose estimation 204 and proceeds to step 634.

At step 632, the tracking application 120 retrieves coordinates for the multiple landmark pairs corresponding to the head pose. In various embodiments, the scaling module 126 retrieves 2D landmark coordinates 202 for each respective face landmark 140 of the selected landmark pairs. In such instances, the scaling module 126 can average one or more scaling factors derived from multiple pairs of landmark pairs, reducing or eliminating the jitter and producing a higher accuracy scaling factor. The increase in accuracy of the scaling factor thus leads to higher accuracy in the tracking application 120 tracking head pose and ears of the user.

At step 634, the tracking application 120 retrieves coordinates for the selected landmark pair corresponding to the head pose. In various embodiments, the scaling module 126 retrieves 2D landmark coordinates 202 for the respective face landmark 140 of the selected landmark pair. In some embodiments, the tracking application 120 can generate a mapping table that identifies a specific landmark pair for each of a plurality of head poses (e.g., classifications of head poses for a given orientation vector). In such instances, the tracking application 120 can generate a mapping table that specifies one of the landmark pairs for each head pose. The tracking application 120 can then retrieve the 2D landmark coordinates 202 for the respective face landmarks 140 included in the landmark pair specified in the mapping table.

At step 640, the tracking application 120 determines the user-specific ear locations 210 based on the 3D landmark coordinates 208. In some embodiments, the scaling module 126 determines landmark depth estimates 206 for each of the face landmarks 140 included in the one or more selected landmark pairs. In such instances, the scaling module 126 generates the landmark depth estimates 206 for the respective 2D landmark coordinates 202 based on the enrollment head geometry 146. The landmark depth estimates 206 can be considered a scaling factor that scales the 3D landmark coordinates 208. The scaling module 126 then uses information from the intrinsic matrix 142, such as the focal length value, to accurately generate the 3D landmark coordinates 208. The ear estimation module 128 of the tracking application then generates the user-specific ear locations 210 based on the 3D landmark coordinates 208. The ear estimation module 128 transforms the one or more 3D landmark coordinates 208 into ear locations by applying the ear relationships 220 to the 3D landmark coordinates 208 indicated in the ear relationships 220.

In sum, techniques are disclosed for implementing image scaling using selected pairs of landmarks representing locations on the face of the user. The techniques involve a method that includes acquiring one or more images of a user and processing the one or more images to determine three-dimensional positions of ears of the user. A tracking application 120 can use a head geometry and values associated with the camera capturing a two-dimensional image to estimate the location of the ears of the user. In some embodiments, the tracking application selects one or more landmark pairs based on an estimated head pose of the user. Each head pose is mapped to one or more corresponding landmark pairs, where the corresponding landmark pairs are likely to be in the view of the camera and accurately labeled in the captured two-dimensional image. The tracking application determines three-dimensional coordinates for the face landmarks and uses the three-dimensional coordinates to estimate the location of the ears of the user relative to the face landmarks. The estimations of the ear locations are transmitted to an audio device that processes one or more audio signals to generate one or more processed audio signals that are based on the three-dimensional locations of the ears.

At least one technical advantage of the disclosed techniques relative to the prior art is that, with the disclosed techniques, accuracy of camera-based head and/or ear tracking is improved. The improved camera-based tracking provides improved noise cancellation, improved crosstalk cancellation, and otherwise improved three-dimensional audio listening experience for users of personal and/or near-field audio systems such as headrest audio systems, seat/chair audio systems, sound bars, vehicle audio systems, and/or the like. The techniques described also enable the use of a single standard imaging camera to track user-specific scaled ear positions in three dimensions. These technical advantages represent one or more technological improvements over prior art approaches.

1. In various embodiments, a computer-implemented method for audio processing based on a head pose of a user comprises acquiring one or more images of a user, processing the one or more images to identify a plurality of face landmarks representing locations on a head of the user, selecting, from the plurality of face landmarks and based on an estimated head pose of the user, a set of one or more landmark pairs, determine, based on the set of landmark pairs, three-dimensional positions of ears of the user, and processing one or more audio signals to generate one or more processed audio signals based on the three-dimensional positions of the ears.

2. The computer-implemented method of clause 1, where the set of landmark pairs includes at least two landmark pairs.

3. The computer-implemented method of any of clause 1 or 2, further comprising averaging the three-dimensional positions of the ears.

4. The computer-implemented method of any of clauses 1-3, further comprising for each face landmark included in the plurality of face landmarks, determining a confidence score associated with a location of the face landmark in the one or more images of the user, ordering, based on the confidence scores, the set of one or more landmark pairs to generate an ordered set of landmark pairs, where selecting the one or more landmark pairs is based on the ordered set of landmark pairs.

5. The computer-implemented method of any of clauses 1-4, where determining the three-dimensional positions of ears based on the set of landmark pairs of the user comprises generating, based on the one or more images, two-dimensional landmark coordinates for the plurality of face landmarks using a face detection model, and generating, based on the estimated head pose, landmark depth estimates for the two-dimensional landmark coordinates, generating, based on the two-dimensional landmark coordinates and the landmark depth estimates, three-dimensional landmark coordinates, where the three-dimensional positions of the ears are based on the three-dimensional landmark coordinates.

6. The computer-implemented method of any of clauses 1-5, further comprising determining a head pose vector based on the two-dimensional landmark coordinates for the plurality of face landmarks, and determining the landmark depth estimates based on the head pose vector.

7. The computer-implemented method of any of clauses 1-6, further comprising determining a head pose based on the two-dimensional landmark coordinates for the plurality of face landmarks, where the head pose is within 45 degrees of a principal point, and determining the landmark depth estimates based on the head pose vector.

8. The computer-implemented method of any of clauses 1-7, where the three-dimensional positions of the ears of the user are determined based on one or more relationships in an enrollment head geometry, where the one or more relationships relate the three-dimensional landmark coordinates to the three-dimensional positions of the ears.

9. The computer-implemented method of any of clauses 1-8, where the plurality of face landmarks include one or more of an eye landmark, an eyebrow landmark, a nose landmark, a glabella landmark, a mouth landmark, a chin landmark, or a jawline landmark.

10. The computer-implemented method of any of clauses 1-9, where the one or more landmark pairs include at least one of a bridge-to-chin landmark pair, a bridge-to-jawline landmark pair, or an eye edge-to-jawline landmark pair.

11. The computer-implemented method of any of clauses 1-10, where one or more speakers generate an audio output from the processed audio signals, and the one or more speakers include one or more of headrest speakers, gaming chair speakers, or sound bar speakers.

12. The computer-implemented method of any of clauses 1-11, where the one or more processed audio signals apply one or more audio effects to the one or more audio signals, where the audio effects include one or more of a spatial audio effect, noise cancellation, or crosstalk cancellation.

13. In various embodiments, one or more non-transitory computer-readable media store instructions that, when executed by one or more processors, cause the one or more processors to perform audio processing based on a head pose of a user by performing the steps of acquiring one or more images of a user, processing the one or more images to identify a plurality of face landmarks representing locations on a head of the user, selecting, from the plurality of face landmarks and based on an estimated head pose of the user, a set of one or more landmark pairs, determine, based on the set of landmark pairs, three-dimensional positions of ears of the user, and processing one or more audio signals to generate one or more processed audio signals based on the three-dimensional positions of the ears.

14. The one or more non-transitory computer-readable media of clause 13, where the set of landmark pairs includes at least two landmark pairs.

15. The one or more non-transitory computer-readable media of clause 13 or 14, further comprising averaging the three-dimensional positions of the ears.

16. The one or more non-transitory computer-readable media of any of clauses 13-15, further comprising, for each face landmark included in the plurality of face landmarks, determining a confidence score associated with a location of the face landmark in the one or more images of the user, ordering, based on the confidence scores, the set of one or more landmark pairs to generate an ordered set of landmark pairs, where selecting the one or more landmark pairs is based on the ordered set of landmark pairs.

17. The one or more non-transitory computer-readable media of any of clauses 13-16, where determining the three-dimensional positions of ears based on the set of landmark pairs of the user comprises generating, based on the one or more images, two-dimensional landmark coordinates for the plurality of face landmarks using a face detection model, generating, based on the estimated head pose, landmark depth estimates for the two-dimensional landmark coordinates, and generating, based on the two-dimensional landmark coordinates and the landmark depth estimates, three-dimensional landmark coordinates, where the three-dimensional positions of the ears are based on the three-dimensional landmark coordinates.

18. The one or more non-transitory computer-readable media of any of clauses 13-17, further comprising determining a head pose vector based on the two-dimensional landmark coordinates for the plurality of face landmarks, and determining the landmark depth estimates based on the head pose vector.

19. The one or more non-transitory computer-readable media of any of clauses 13-18, where the three-dimensional positions of the ears of the user are determined based on one or more relationships in an enrollment head geometry, where the one or more relationships relate the three-dimensional landmark coordinates to the three-dimensional positions of the ears.

20. In various embodiments, a system comprises one or more speakers, a camera that captures one or more images of a user, a memory storing instructions, and one or more processors, that when executing the instructions, are configured to perform audio processing based on a head pose of a user by performing the steps of acquiring one or more images of a user, processing the one or more images to identify a plurality of face landmarks representing locations on a head of the user, selecting, from the plurality of face landmarks and based on an estimated head pose of the user, a set of one or more landmark pairs, determine, based on the set of landmark pairs, three-dimensional positions of ears of the user, and processing one or more audio signals to generate one or more processed audio signals based on the three-dimensional positions of the ears.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method for audio processing based on a head pose of a user, the computer-implemented method comprising:

    acquiring one or more images of a user;
    processing the one or more images to identify a plurality of face landmarks representing locations on a head of the user;
    selecting, from the plurality of face landmarks and based on an estimated head pose of the user, a set of one or more landmark pairs;
    determine, based on the set of landmark pairs, three-dimensional positions of ears of the user; and
    processing one or more audio signals to generate one or more processed audio signals based on the three-dimensional positions of the ears.

2. The computer-implemented method of claim 1, wherein the set of landmark pairs includes at least two landmark pairs.

3. The computer-implemented method of claim 2, further comprising averaging the three-dimensional positions of the ears.

4. The computer-implemented method of any preceding claim, further comprising:

    for each face landmark included in the plurality of face landmarks, determining a confidence score associated with a location of the face landmark in the one or more images of the user;
    ordering, based on the confidence scores, the set of one or more landmark pairs to generate an ordered set of landmark pairs, wherein selecting the one or more landmark pairs is based on the ordered set of landmark pairs.

5. The computer-implemented method of any preceding claim, wherein determining the three-dimensional positions of ears based on the set of landmark pairs of the user comprises:

generating, based on the one or more images, two-dimensional landmark coordinates for the plurality of face landmarks using a face detection model; and

generating, based on the estimated head pose, landmark depth estimates for the two-dimensional landmark coordinates;

generating, based on the two-dimensional landmark coordinates and the landmark depth estimates, three-dimensional landmark coordinates, wherein the three-dimensional positions of the ears are based on the three-dimensional landmark coordinates.

6. The computer-implemented method of claim 5, further comprising:

determining a head pose vector based on the two-dimensional landmark coordinates for the plurality of face landmarks; and

determining the landmark depth estimates based on the head pose vector.

7. The computer-implemented method of claim 5 or 6, further comprising:

determining a head pose based on the two-dimensional landmark coordinates for the plurality of face landmarks, wherein the head pose is within 45 degrees of a principal point; and

determining the landmark depth estimates based on the head pose vector.

8. The computer-implemented method of any of claims 5 to 7, wherein the three-dimensional positions of the ears of the user are determined based on one or more relationships in an enrollment head geometry, wherein the one or more relationships relate the three-dimensional landmark coordinates to the three-dimensional positions of the ears.

9. The computer-implemented method of any preceding claim, wherein the plurality of face landmarks includes one or more of an eye landmark, an eyebrow landmark, a nose landmark, a glabella landmark, a mouth landmark, a chin landmark, or a jawline landmark.

10. The computer-implemented method of any preceding claim, wherein the one or more landmark pairs include at least one of a bridge-to-chin landmark pair, a bridge-to-jawline landmark pair, or an eye edge-to-jawline landmark pair.

11. The computer-implemented method of any preceding claim wherein:

one or more speakers generate an audio output from the processed audio signals; and

the one or more speakers include one or more of headrest speakers, gaming chair speakers, or sound bar speakers.

12. The computer-implemented method of any preceding claim, wherein the one or more processed audio signals apply one or more audio effects to the one or more audio signals, wherein the audio effects include one or more of a spatial audio effect, noise cancellation, or crosstalk cancellation.

13. One or more non-transitory computer-readable media storing instructions that, when executed by one or more processors, cause the one or more processors to perform audio processing based on a head pose of a user by performing the steps of a method as mentioned in any of claims 1 to 12.

14. A system comprising:

one or more speakers;

a camera that captures one or more images of a user;

a memory storing instructions; and

one or more processors, that when executing the instructions, are configured to perform a method as mentioned in any of claims 1 to 12.

**Patentansprüche**

1. Computerimplementiertes Verfahren zur Audioverarbeitung basierend auf einer Kopfhaltung eines Benutzers, wobei das computerimplementierte Verfahren Folgendes umfasst:

   Erfassen eines oder mehrerer Bilder eines Benutzers;
   Verarbeiten des einen oder der mehreren Bilder, um eine Vielzahl von Gesichtsmarkierungen zu identifizieren, die Stellen auf dem Kopf des Benutzers darstellen;
   Auswählen, aus der Vielzahl von Gesichtsmarkierungen und basierend auf einer geschätzten Kopfhaltung des Benutzers, eines Satzes von einem oder mehreren Markierungspaaren;
   Bestimmen, basierend auf dem Satz von Markierungspaaren, von dreidimensionalen Positionen von Ohren des Benutzers; und
   Verarbeiten eines oder mehrerer Audiosignale, um ein oder mehrere verarbeitete Audiosignale basierend auf den dreidimensionalen Positionen der Ohren zu generieren.

2. Computerimplementiertes Verfahren nach Anspruch 1, wobei der Satz von Markierungspaaren mindestens zwei Markierungspaare beinhaltet.

3. Computerimplementiertes Verfahren nach Anspruch 2, ferner umfassend das Mitteln der dreidimensionalen Positionen der Ohren.

4. Computerimplementiertes Verfahren nach einem der vorhergehenden Ansprüche, ferner Folgendes umfassend:

   für jede Gesichtsmarkierung, die in der Vielzahl von Gesichtsmarkierungen beinhaltet ist, Bestimmen einer Konfidenzbewertung, die einer Stelle der Gesichtsmarkierung in dem einen oder den mehreren Bildern des Benutzers zugeordnet ist;
   Ordnen, basierend auf den Konfidenzbewertungen, des Satzes von einem oder mehreren Markierungspaaren, um einen geordneten Satz von Markierungspaaren zu generieren, wobei das Auswählen des einen oder der mehreren Markierungspaare auf dem geordneten Satz von Markierungspaaren basiert.

5. Computerimplementiertes Verfahren nach einem der vorhergehenden Ansprüche, wobei das Bestimmen der dreidimensionalen Positionen von Ohren basierend auf dem Satz von Markierungspaaren des Benutzers Folgendes umfasst:

   Generieren, basierend auf dem einen oder den mehreren Bildern, zweidimensionaler Markierungskoordinaten für die Vielzahl von Gesichtsmarkierungen unter Verwendung eines Gesichtserkennungsmodells; und
   Generieren, basierend auf der geschätzten Kopfhaltung, von Markierungstiefenschätzungen für die zweidimensionalen Markierungskoordinaten;
   Generieren, basierend auf den zweidimensionalen Markierungskoordinaten und den Markierungstiefenschätzungen, dreidimensionaler Markierungskoordinaten, wobei die dreidimensionalen Positionen der Ohren auf den dreidimensionalen Markierungskoordinaten basieren.

6. Computerimplementiertes Verfahren nach Anspruch 5, ferner Folgendes umfassend:

   Bestimmen eines Kopfhaltungsvektors basierend auf den zweidimensionalen Markierungskoordinaten für die Vielzahl von Gesichtsmarkierungen; und
   Bestimmen der Markierungstiefenschätzungen basierend auf dem Kopfhaltungsvektor.

7. Computerimplementiertes Verfahren nach Anspruch 5 oder 6, ferner Folgendes umfassend:

   Bestimmen einer Kopfhaltung basierend auf den zweidimensionalen Markierungskoordinaten für die Vielzahl von Gesichtsmarkierungen, wobei die Kopfhaltung innerhalb von 45 Grad von einem Hauptpunkt liegt; und
   Bestimmen der Markierungstiefenschätzungen basierend auf dem Kopfhaltungsvektor.

8. Computerimplementiertes Verfahren nach einem der Ansprüche 5 bis 7, wobei die dreidimensionalen Positionen der Ohren des Benutzers basierend auf einer oder mehreren Beziehungen in einer Registrierungskopfgeometrie bestimmt werden, wobei die eine oder die mehreren Beziehungen die dreidimensionalen Markierungskoordinaten auf die dreidimensionalen Positionen der Ohren beziehen.

9. Computerimplementiertes Verfahren nach einem der vorhergehenden Ansprüche, wobei die Vielzahl von Gesichtsmarkierungen eines oder mehrere von einer Augenmarkierung, einer Augenbrauenmarkierung, einer Nasenmarkierung, einer Glabellamarkierung, einer Mundmarkierung, einer Kinnmarkierung oder einer Kieferpartiemarkierung beinhaltet.

10. Computerimplementiertes Verfahren nach einem der vorhergehenden Ansprüche, wobei das eine oder die mehreren Markierungspaare mindestens eines von einem Nasenrücken-Kinn-Markierungspaar, einem Nasenrücken-Kieferpartie-Markierungspaar oder einem Augenrand-Kieferpartie-Markierungspaar beinhalten.

11. Computerimplementiertes Verfahren nach einem der vorhergehenden Ansprüche, wobei:

    ein oder mehrere Lautsprecher eine Audioausgabe aus den verarbeiteten Audiosignalen generieren; und
    die einen oder mehreren Lautsprecher einen oder mehrere von Kopfstützenlautsprechern, Gaming-Stuhl-Lautsprechern oder Soundbar-Lautsprechern beinhalten.

12. Computerimplementiertes Verfahren nach einem der vorhergehenden Ansprüche, wobei das eine oder die mehreren verarbeiteten Audiosignale einen oder mehrere Audioeffekte auf das eine oder die mehreren Audiosignale anwenden, wobei die Audioeffekte eines oder mehrere von einem räumlichen Audioeffekt, Geräuschunterdrückung oder Übersprechunterdrückung beinhalten.

13. Ein oder mehrere nichtflüchtige computerlesbare Medien, die Anweisungen speichern, die, wenn sie durch einen oder mehrere Prozessoren ausgeführt werden, den einen oder die mehreren Prozessoren veranlassen, Audioverarbeitung basierend auf einer Kopfhaltung eines Benutzers durch Durchführen der Schritte eines Verfahrens nach einem der Ansprüche 1 bis 12 durchzuführen.

14. System, Folgendes umfassend:

    einen oder mehrere Lautsprecher;
    eine Kamera, die ein oder mehrere Bilder eines Benutzers erfasst;
    einen Speicher, der Anweisungen speichert; und
    einen oder mehrere Prozessoren, die, wenn sie die Anweisungen ausführen, dafür konfiguriert sind, ein Verfahren nach einem der Ansprüche 1 bis 12 durchzuführen.

**Revendications**

1. Procédé mis en œuvre par ordinateur de traitement audio sur la base d'une pose de tête d'un utilisateur, le procédé mis en œuvre par ordinateur comprenant :

    l'acquisition d'une ou plusieurs images d'un utilisateur ;
    le traitement des une ou plusieurs images pour identifier une pluralité de points de repère de visage représentant des emplacements sur une tête de l'utilisateur ;
    la sélection, à partir de la pluralité de points de repère de visage et sur la base d'une pose de tête estimée de l'utilisateur, d'un ensemble d'une ou plusieurs paires de points de repère ;
    déterminer, sur la base de l'ensemble de paires de points de repère, les positions tridimensionnelles des oreilles de l'utilisateur ; et
    le traitement d'un ou plusieurs signaux audio pour générer un ou plusieurs signaux audio traités sur la base des positions tridimensionnelles des oreilles.

2. Procédé mis en œuvre par ordinateur selon la revendication 1, dans lequel l'ensemble de paires de points de repère comporte au moins deux paires de points de repère.

3. Procédé mis en œuvre par ordinateur selon la revendication 2, comprenant en outre le calcul de la moyenne des positions tridimensionnelles des oreilles.

4. Procédé mis en œuvre par ordinateur selon une quelconque revendication précédente, comprenant en outre :

    pour chaque point de repère de visage inclus dans la pluralité de points de repère de visage, la détermination d'un score de confiance associé à un emplacement du point de repère de visage dans les une ou plusieurs images de l'utilisateur ;

le fait d'ordonner, sur la base des scores de confiance, l'ensemble d'une ou plusieurs paires de points de repère pour générer un ensemble ordonné de paires de points de repère, dans lequel la sélection des une ou plusieurs paires de points de repère est basée sur l'ensemble ordonné de paires de points de repère.

5. Procédé mis en œuvre par ordinateur selon une quelconque revendication précédente, dans lequel la détermination des positions tridimensionnelles des oreilles sur la base de l'ensemble de paires de points de repère comprend :

la génération, sur la base des une ou plusieurs images, de coordonnées de point de repère bidimensionnelles pour la pluralité de points de repère de visage à l'aide d'un modèle de détection de visage ; et

la génération, sur la base de la pose de tête estimée, d'estimations de profondeur de point de repère pour les coordonnées de point de repère bidimensionnelles ;

la génération, sur la base des coordonnées de point de repère bidimensionnelles et des estimations de profondeur de point de repère, de coordonnées de point de repère tridimensionnelles, dans lequel les positions tridimensionnelles des oreilles sont basées sur les coordonnées de point de repère tridimensionnelles.

6. Procédé mis en œuvre par ordinateur selon la revendication 5, comprenant en outre :

la détermination d'un vecteur de pose de tête sur la base des coordonnées de point de repère bidimensionnelles pour la pluralité de points de repère de visage ; et

la détermination des estimations de profondeur de point de repère sur la base du vecteur de pose de tête.

7. Procédé mis en œuvre par ordinateur selon la revendication 5 ou 6, comprenant en outre :

la détermination d'une pose de tête sur la base des coordonnées de point de repère bidimensionnelles pour la pluralité de points de repère de visage, dans lequel la pose de tête se situe à moins de 45 degrés d'un point principal ; et

la détermination des estimations de profondeur de point de repère sur la base du vecteur de pose de tête.

8. Procédé mis en œuvre par ordinateur selon l'une quelconque des revendications 5 à 7, dans lequel les positions tridimensionnelles des oreilles de l'utilisateur sont déterminées sur la base d'une ou plusieurs relations dans une géométrie de tête d'inscription, dans lequel les une ou plusieurs relations relient les coordonnées de point de repère tridimensionnelles aux positions tridimensionnelles des oreilles.

9. Procédé mis en œuvre par ordinateur selon une quelconque revendication précédente, dans lequel la pluralité de points de repère de visage comporte un ou plusieurs éléments parmi un point de repère d'œil, un point de repère de sourcil, un point de repère de nez, un point de repère de glabelle, un point de repère de bouche, un point de repère de menton ou un point de repère de ligne de mâchoire.

10. Procédé mis en œuvre par ordinateur selon une quelconque revendication précédente, dans lequel les une ou plusieurs paires de points de repère comportent au moins l'une d'une paire de points de repère arête du nez-menton, d'une paire de points de repère arête du nez-ligne de la mâchoire, ou d'une paire de points de repère bord d'œil-ligne de la mâchoire.

11. Procédé mis en œuvre par ordinateur selon une quelconque revendication précédente, dans lequel :

un ou plusieurs haut-parleurs génèrent une sortie audio à partir des signaux audio traités ; et

les un ou plusieurs haut-parleurs comportent un ou plusieurs éléments parmi des haut-parleurs d'appui-tête, des haut-parleurs de chaise de jeu ou des haut-parleurs de barre de son.

12. Procédé mis en œuvre par ordinateur selon une quelconque revendication précédente, dans lequel les un ou plusieurs signaux audio traités appliquent un ou plusieurs effets audio aux un ou plusieurs signaux audio, dans lequel les effets audio comportent un ou plusieurs éléments parmi un effet audio spatial, une annulation de bruit ou une annulation de diaphonie.

13. Un ou plusieurs supports non transitoires lisibles par ordinateur stockant des instructions qui, lorsqu'elles sont exécutées par un ou plusieurs processeurs, amènent les un ou plusieurs processeurs à réaliser un traitement audio sur la base d'une pose de tête d'un utilisateur en réalisant les étapes d'un procédé selon l'une quelconque des revendications 1 à 12.

14. Système comprenant :

un ou plusieurs haut-parleurs ;
une caméra qui capture une ou plusieurs images d'un utilisateur ;
une mémoire stockant des instructions ; et
un ou plusieurs processeurs qui, lors de l'exécution des instructions, sont configurés pour réaliser un procédé selon l'une quelconque des revendications 1 à 12.

100

Camera(s) 150

Speaker(s) 160

2D Image Data 152

Processing Unit(s) 112

Memory 114

Tracking Application 120

Face Detection and Estimation Model 122

Head Pose Estimation Module 124

Scaling Module 126

Ear Estimation Module 128

Audio Application 130

Generic Head Geometry 144

Face Landmark(s) 140

Intrinsic Matrix 142

Enrollment Head Geometry 146

Computing Device(s) 110

# FIG. 1

**FIG. 2**

**FIG. 3**

EP 4 571 684 B1

**FIG. 4**

EP 4 571 684 B1

500

502 — Retrieve the intrinsic matrix

504 — Perform enrollment to generate enrollment head geometry

506 — Acquire 2D image data

508 — Identify landmark coordinates

510 — Determine head pose

512 — Select landmark coordinates

514 — Generate user-specific ear locations based on the selected landmark coordinates

516 — Generate processed audio signals based on the user-specific ear locations

518 — Generate sound field based on the processed audio signals

**FIG. 5**

FIG. 6

**EP 4 571 684 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023316810 A1
- US 2023222687 A1